# EUROPEAN PATENT APPLICATION

(11) **EP 3 163 867 A1**
(43) Date of publication of application: **03.05.2017**
(21) Application number: 16195314.6
(22) Date of filing: 24.10.2016
(51) Int. Cl.: H04N 5/33

(54) **AUTOMATED VEHICLE IMAGER DEVICE WITH IMPROVED INFRARED SENSITIVITY**

(30) Priority: 28.10.2015 US 201514924753
(71) Applicant: Delphi Technologies, Inc., Troy, MI 48007 (US)
(72) Inventor: LOW, Yew Kwang, 738082 Singapore (SG); YEO, Kok Wee, 530430 Singapore (SG); YEO, CHEE KENG, 575728 Singapore (SG)
(74) Representative: Delphi France SAS

(57) **Abstract**

An imager device (10) for detecting light indicative of an image projected onto the device (10) includes an arrangement of visible-light pixels (12). Each visible-light pixel is characterized by a first-area (16). The device (10) also includes an arrangement of infrared pixels (18) interleaved with the visible-light pixels (12). Each infrared pixel is characterized by a second-area (20) greater than the first-area (16). The visible-light pixels (12) are alternatively characterized by a first-resolution, so the infrared pixels (18) are characterized by a second-resolution less than the first-resolution. The device (10) also defines a plurality of pixel-cells (22). Each pixel-cell includes a visible-light pixel and a portion of an infrared pixel that is part of an adjacent pixel-cell.

## Description

### TECHNICAL FIELD OF INVENTION

This disclosure generally relates to an imager device that includes an arrangement of visible-light pixels, each visible-light pixel is characterized by a first-area, and an arrangement of infrared pixels interleaved with the visible-light pixels.

### BACKGROUND OF INVENTION

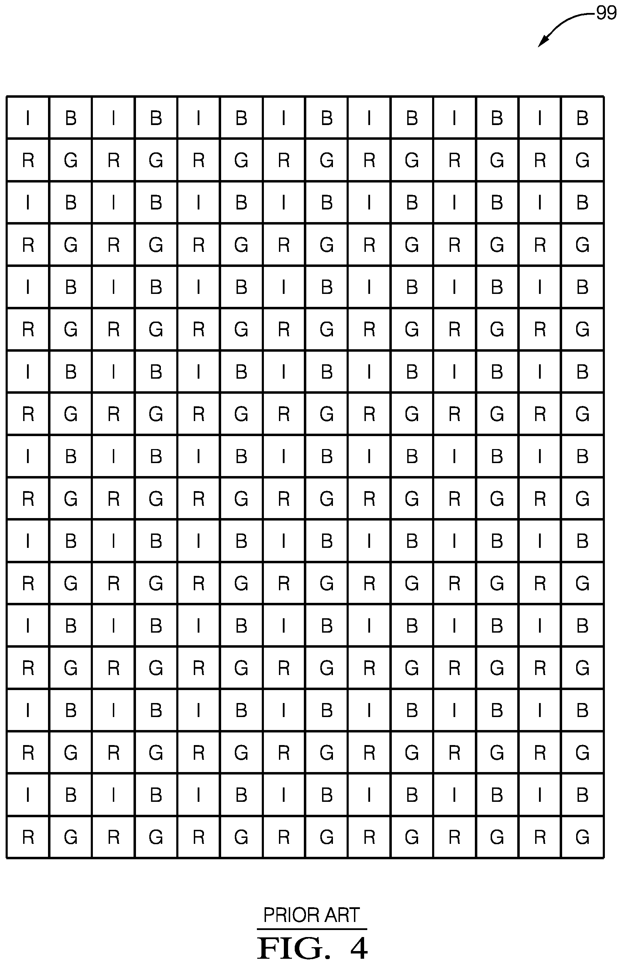

It is desired to have a camera system that captures both visible light images and infrared light images. Such camera systems are especially useful for automated vehicles to distinguish inanimate objects from humans and other animals. Camera systems have been proposed that include distinct or separate cameras, each specifically configured to capture either visible light images or infrared light images. However, such multi-camera systems are undesirable bulky and require aligning of the visible light images with the infrared light images. It has also been proposed to equip a single imager device with both visible light pixels and infrared pixels that are interleaved, i.e. arranged individually side-by-side so image alignment is not an issue. However, when compared to comparably sized instance of the visible light pixels (Fig. 4), the relative sensitivity of the infrared pixels is less than desired.

### SUMMARY OF THE INVENTION

In accordance with one embodiment, an imager device for detecting light indicative of an image projected onto the device is provided. The device includes an arrangement of visible-light pixels. Each visible-light pixel is characterized by a first-area. The device also includes an arrangement of infrared pixels interleaved with the visible-light pixels. Each infrared pixel is characterized by a second-area greater than the first-area.

In another embodiment, an imager device for detecting light indicative of an image projected onto the device is provided. The device includes an arrangement of visible-light pixels. The visible-light pixels are characterized by a first-resolution. The device also includes an arrangement of infrared pixels interleaved with the visible-light pixels. The infrared pixels are characterized by a second-resolution less than the first-resolution.

In either of these embodiments, the device defines a plurality of pixel-cells. Each pixel-cell includes a visible-light pixel and a portion of an infrared pixel that is part of an adjacent pixel-cell.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is an arrangement of visible-light pixels and infrared pixels that form an imager device in accordance with one embodiment;
Fig. 2 is an arrangement of visible-light pixels and infrared pixels that form an imager device in accordance with one embodiment;
Fig. 3 is an arrangement of visible-light pixels and infrared pixels that form an imager device in accordance with one embodiment; and
Fig. 4 is a known arrangement of visible-light pixels and infrared pixels that form an imager device in accordance with one embodiment.

### DETAILED DESCRIPTION

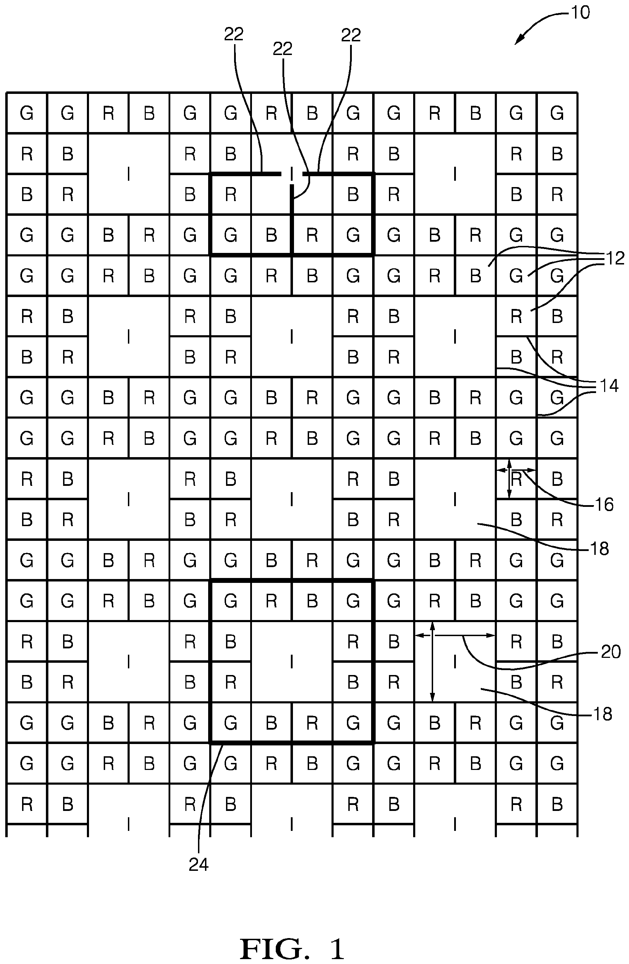

Fig. 1 illustrates a non-limiting example of an imager device 10, hereafter referred to as the device 10. It should be recognized that the illustrations presented herein show only a small portion of the device 10, and this is only to simplify the illustration. It is contemplated that the device 10 will have thousands of pixels, for example a matrix of 1280x960 pixels. As will be recognized by those in the art, the device may be part of a camera or camera system, for example a video camera, for detecting light indicative of an image projected onto the device. It will be recognized that the camera may include a lens assembly (not shown) to focus the image onto the device 10, and a controller (not shown) to receive signals from each of the pixels defined by the device 10. Such a camera will be useful for operating an automated-vehicle such as an autonomous or fully-automated vehicle where an operator (not shown) of the automated-vehicle is little-more involved with operating the automated-vehicle than would be a passenger (not shown) residing in a rear seat of the automated-vehicle. Alternatively, the automated-vehicle may be configured for partial automation where, for example, only the speed of the automated-vehicle is controlled, which may or may not include automated operation of the brakes on the automated-vehicle, where the steering of automated-vehicle is the responsibility of the operator.

Continuing to refer to Fig. 1, the device 10 includes an arrangement of visible-light pixels 12, which in this example are designated by the color that each of the visible-light pixels 12 is adapted to detect, e.g. red (R), green (G) and blue (B). The active areas of the visible-light pixels 12 are defined by a border 14. The border 14 may be used for the routing of conductors from each of the visible-light pixels 12 to a contact-section (not shown) of the device 10 where, for example, a controller can make electrical contact with the device 10 so image-signals from the device 10 can be stored or processed by the controller. In this example, each instance of the visible-light pixels 12 (R, G, B) is characterized by a first-area 16, i.e. a first-size or first-area-value for each of the visible-light pixels 12.

While this and other examples of the device 10 described herein suggest that all of the visible-light pixels 12 are the same size, i.e. are all characterized by the same value of the first-area 16, this is not a requirement. For example, it is recognized that in some instances it may be advantageous for the green-pixel G to have a larger area than the red-pixel R or the blue-pixel B so the combination of pixels have more similar sensitivities to the respective color of light that each are adapted to detect.

The device 10 includes an arrangement of infrared pixels 18 that are interleaved with the visible-light pixels 12. As used herein, the term interleaved means that the visible-light pixels 12 and the infrared pixels 18 are arranged so that the alignment of a visible-light based image and an infrared-light based image is inherent. By contrast, for example, World Intellectuals Property Organization publication WO2014/143338, published 18-September-2014 by Hogasten et al., shows an arrangement of the visible-light pixels located on one half of the imager device, while the arrangement of the infrared pixels is on the other half of the device. Such an arrangement is not in accordance with the meaning of interleaved as used herein.

Fig. 4 shows an example of a known imager-device 99 where each instance of the visible-light pixels (R, G, B) and each instance of the infrared pixels (I) have the same area. As noted above, this configuration of similar sized visible-light and infrared pixels has undesirably low infrared-light sensitivity relative to visible-light sensitivity. By contrast, the device 10 described herein advantageously is configured so each instance of the infrared-pixels 18, i.e. the infrared pixel I, is characterized by a second-area 20 greater than the first-area 16. Because the each instance of the infrared-pixels 18 is larger than each instance of the visible-light pixels 12, the relative sensitivity for detecting visible-light images and infrared-light images is better balanced.

It was recognized that for automated vehicle applications the resolution of an infrared image could be less than the resolution of a visible-light image. It was further recognized that by arranging each instance of a plurality of pixel-cells 22, which is characterized as including at least one visible-light pixel and at least a portion of an infrared pixel, so that the border 14 could be removed from adjacent instances of first area sized instances of infrared pixels; the arrangement shown in Fig. 1 where each instance of the infrared pixels 18 is 'shared' by adjacent instances of the pixel-cells 22 was discovered. That is, each instance of the infrared pixels 18 is shared by more than one instance of the pixel-cells 22. While the examples described herein show a four-to-one ratio of the visible-light resolution to the infrared-light resolution, other ratios greater than and less than four-to-one are contemplated. In general, the arrangement of visible-light pixels 12 is characterized by a first-resolution, and the arrangement of infrared pixels 18 is characterized by a second-resolution less than the first-resolution.

By reorienting instance of pixel-cells and removing the border 14 so four instances of the infrared pixel I shown in Fig. 4 could be combined as shown in Fig. 1, the active area (the second area 20) of each instance of the infrared pixels 18 is increased by more greater than a factor of four because the inactive area of the border 14 is eliminated. That is, the second-area 20 is greater than four times the first-area 16. As a result, the infrared-light sensitivity of the device 10 is advantageously increased with respect to the visible-light-sensitivity. It is further noted that even if the visible-light pixels in each of the pixel-cells include a red pixel R, a green pixel G, and a blue pixel B, and a combination of areas of the red pixel r, the green pixel G, and the blue pixel B is used to determine a larger value of the first-area 16, e.g. three times the first-area 16, the second area 20 is still greater than three times the first-area 16.

As noted above, the device defines a plurality of pixel-cells 22, and each instance of the pixel-cells 22 includes at least one visible-light pixel and a portion of an infrared pixel that is part of an adjacent instance of the pixel-cells 22. In the example shown in Fig 1, the infrared pixel I is shared by four adjacent instances of the pixel-cells 22. If a two-to-one visible-light to infrared resolution ratio was desired, the imager device could be readily arranged so only two adjacent instances of the pixel-cells 22 would share one instance of the infrared pixels. As shown in Fig. 1, four adjacent instances of the pixel-cells 22 are arranged to define a square 24, and the infrared pixel I occupies a center-portion of the square 24. If a two-to-one resolution ratio was desired, an arrangement where two adjacent instances of the pixel-cells 22 are arranged to define a rectangle (not shown) is contemplated.

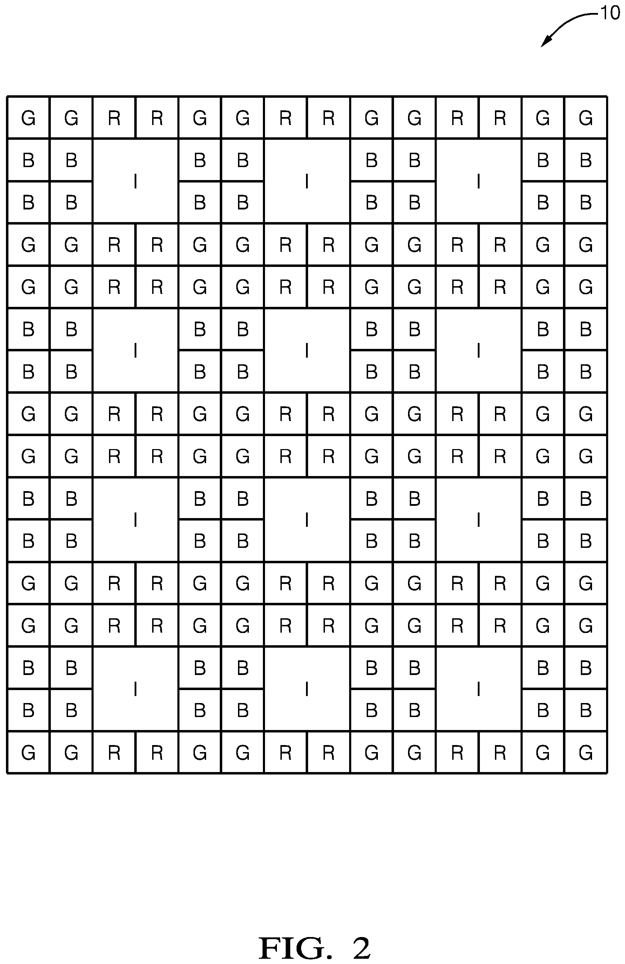

Fig. 2 illustrates an alternative embodiment of the device 10 that is an example of how the pixels could be arrange to allow an easier readout sequence and simpler masking technics for producing the filter layer (not shown) that overlies each of the pixels with the proper filter material. This would allow the use of a common mask for coating of the R, G, B, and I filter colors. This is achieved by offsetting the mask to create respective opening when each color filter is coated. For example after coating the IR transmitting filter, simply shift the mask up or down four pixels to shift the mask opening to the red transmitting pixels for coating of red filter, then shift the filter again to the right or left four pixels to shift the mask opening to green transmitting pixels for coating of green filter, and then finally up or down four pixels again to shift the mask opening to the blue transmitting pixels for coating of blue filter. With this configuration, the same mask tool can be used in a step-and-repeat process to apply all of the different colored filter layers.

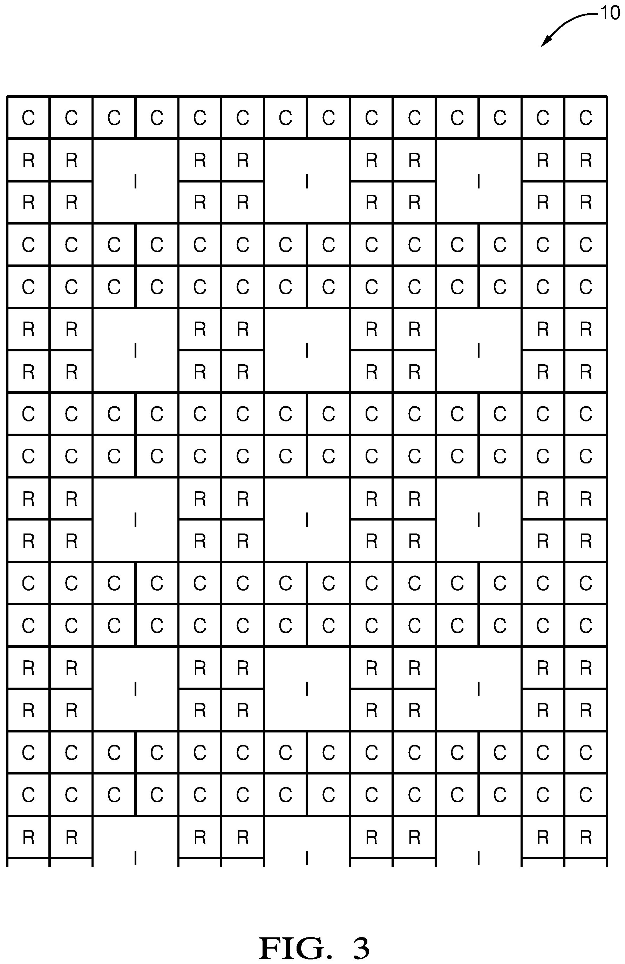

Fig. 3 illustrates another alternative embodiment of the device 10 that is an example of how the pixels could be arranged to provide an option for the device 10 to operate at a lower resolution with four pixels working as one color component to improve the low light performance of the color camera. Traditional color filter will need compounding color computation in order to combine four pixels for a single color component and then combine again with neighboring four pixels to compute a lower resolution image pixel color (where sixteen pixels are used to compute the color representation at lower resolution for low light condition) due to the fact that four pixels are used to calculate the color perceived by the device 10, where each color filter element is dedicated to a single pixel. This example enables an additional operation mode with a simpler process using a scalable color computation to operate the camera at a lower resolution during low light condition to improve image sensing. This configuration of the device 10 can also be used for an RCCI (Red, Clear, Clear, IR) filter configuration as illustrated to achieve the same scalable functionality. The RCCI configuration is also useful for automated vehicle where a black-and-white image is sufficient for visible-light based object detection/classification, but the red pixels allow for easier detection of red taillights of other vehicles.

Accordingly, an imager device (the device 10) for detecting light indicative of an image projected onto the device 10 is provided. The device 10 provides for increased relative sensitivity to infrared light with respect to visible light while maintaining efficient use of the total available detection area of the device 10.

While this invention has been described in terms of the preferred embodiments thereof, it is not intended to be so limited, but rather only to the extent set forth in the claims that follow.

## Claims

1. An imager device (10) for detecting light indicative of an image projected onto the device (10), said device (10) comprising:
an arrangement of visible-light pixels (12) **characterized by** a first-resolution; and
an arrangement of infrared pixels (18) interleaved with the visible-light pixels (12), said infrared pixels (18) **characterized by** a second-resolution less than the first-resolution.

2. The device (10) in accordance with claim 1, wherein the visible-light pixels (12) are **characterized by** a first-area (16), and the infrared pixels (18) are **characterized by** a second-area (20) greater than the first-area (16).

3. The device (10) in accordance with claim 1 or 2, wherein the device (10) defines a plurality of pixel-cells (22), and each pixel-cell includes a visible-light pixel and a portion of an infrared pixel that is part of an adjacent pixel-cell.

4. The device (10) in accordance with claim 3, wherein the infrared pixel is shared by four adjacent pixel-cells (22).

5. The device (10) in accordance with claim 4, wherein the four adjacent pixel-cells (22) are arranged to define a square (24), and the infrared pixel occupies a center-portion of the square (24).

6. The device (10) in accordance with any one of claims 1 to 5, wherein the visible-light pixels (12) are **characterized by** a first-area (16), and the infrared pixels (18) are **characterized by** a second-area (20) greater than four times the first-area (16).

7. The device (10) in accordance with any one of claims 1 to 6, said device (10) being configured to define a plurality of pixel-cells (22), each pixel-cell comprising:
a red pixel, a green pixel, a blue pixel, and a portion of an infrared pixel that is part of an adjacent pixel-cell.

8. The device (10) in accordance with claim 7, wherein the infrared pixel is shared by four adjacent pixel-cells (22).

9. The device (10) in accordance with claim 8, wherein the four adjacent pixel-cells (22) are arranged to define a square (24), and the infrared pixel occupies a center-portion of the square (24).

10. The device (10) in accordance with claim 9, wherein a combination of areas of the red pixel, the green pixel, and the blue pixel is **characterized by** a first area, the infrared pixel is **characterized by** a second area (20) greater than the first area.
